# EUROPÄISCHE PATENTSCHRIFT

(11) **EP 1 129 913 B1**
(45) Veröffentlichungstag und Bekanntmachung des Hinweises auf die Patenterteilung: **27.10.2004**
(21) Anmeldenummer: 01104675.2
(22) Anmeldetag: 24.02.2001
(51) Int. Cl.: B60R 25/10

(54) **Kraftfahrzeug mit einer Diebstahlwarnanlage**
Vehicle with an antitheft alarm device
Véhicule avec dispositif d'alarme antivol

(30) Priorität: 01.03.2000 DE 10009787
(43) Veröffentlichungstag der Anmeldung: 05.09.2001
(73) Patentinhaber: ADAM OPEL AG, 65423 Rüsselsheim (DE)
(72) Erfinder: Diehl, Peter G., Dipl.-Ing., 64521 Gross-Gerau (DE)
(74) Vertreter: Daniel, Ulrich W.P.

(56) Entgegenhaltungen:
- DE-U- 29 919 032
- "1997 STURN COUPES" , AUTOMOTIVE ENGINEERING, SOCIETY OF AUTOMOTIVE ENGINEERS. WARRENDALE, US, VOL. 104, NR. 11, PAGE(S) 31-32 XP000640005 ISSN: 0098-2571 * Seite 2, Spalte 4 *

## Beschreibung

Die Erfindung bezieht sich auf ein Kraftfahrzeug mit einer Diebstahlwarnanlage mit den im Oberbegriff des Patentanspruchs 1 angegebenen Merkmalen.

Aus der DE 36 07 784 C2 sowie aus der gattungsbildenden DE 43 01 630 C1 sind Fahrzeuge bekannt, wobei der Betriebszustand der Diebstahlwarnanlage jeweils durch ein optisches Signalmittel angezeigt wird. Die Einrichtung nach DE 36 07 784 C2 hat sich nicht durchgesetzt, weil ein hoher Aufwand zur Anordnung eines Blitzlichtes im Fußraum des Fahrzeugs und ein hoher Ruhestromverbrauch nötig sind. Vorteilhaft ist jedoch, dass Teile des Fahrzeuginnenraumes kurzzeitig beleuchtet werden, so dass am Fahrzeug befindliche Diebe auch bei Nacht von weitem erkennbar sind. Die Signalmittel nach DE 43 01 630 C1 leuchten sehr unauffällig und erhellen den Fahrzeuginnenraum nicht.

Aus US-A-5 947 588 sind bereits sehr stromsparende Leuchten mit Leuchtdioden (LEDs) als Leuchtmittel für Kraftfahrzeuge bekannt.

Es ist Aufgabe der Erfindung, ein Kraftfahrzeug mit Diebstahlwarnanlage zu schaffen, bei dem mit sehr geringem Aufwand und ruhestromoptimiert der Betriebszustand der Diebstahlwarnanlage signalisiert und der Fahrzeuginnenraum erleuchtet wird.

Zur Lösung dieser Aufgabe zeichnet sich die Erfindung durch die im Patentanspruch 1 angegebenen Merkmale aus. Weitere Einzelheiten ergeben sich aus den Patentansprüchen 2 bis 4.

Eine bereits im Fahrzeug vorhandene Innenraumleuchte kann auch als Signalmittel zur Anzeige des Betriebszustandes der Diebstahlwarnanlage dienen, da diese Leuchte bei aktiver Diebstahlwarnanlage sonst grundsätzlich nicht aktiv ist. Des Weiteren ist die Innenraumleuchte natürlich ohne Veränderung bereits geeignet, zumindest Teile des Fahrzeuginnenraumes zu erhellen. Wird diese Innenraumleuchte nunmehr auch bei aktiver Diebstahlwarnanlage aussetzend angesteuert, kann einerseits einfach erkannt werden, dass die Diebstahlwarnanlage aktiv ist und andererseits sind bei Dunkelheit Personen (Diebe) im oder am Fahrzeug von weitem erkennbar.

Vorteilhaft wird eine als Ambient-Leuchte ausgeführte Innenraumleuchte als optisches Signalmittel verwendet, wobei diese besonders dann ruhestromoptimiert ansteuerbar ist, wenn sie als Leuchtmittel LEDs beinhaltet. Zur Reduzierung des Ruhestromverbrauches bei aktiver Diebstahlwarnanlage sollte die Innenraumleuchte bei Ansteuerung zur normalen Innenraumbeleuchtung mit einer höheren Lichtintensität leuchten als bei Signalisierung der aktiven Diebstahlwarnanlage. Dies ist durch an sich bekannte Spannungs- oder Pulsweitenmodulation möglich, kann aber auch durch selektive Ansteuerung mehrerer vorhandener Leuchtmittel der Innenraumleuchte erreicht werden. Auch dies ist besonders vorteilhaft zu verwirklichen, wenn als Leuchtmittel mehrere LEDs in der Innenraumleuchte angeordnet sind. Zur Ambient-Beleuchtung werden dann alle LEDs mit elektrischer Spannung beaufschlagt und zur Signalisierung der aktiven Diebstahlwarnanlage werden nur einige der vorhandenen LEDs aussetzend mit elektrischer Spannung versorgt.

Die Innenraumleuchte wird heute bereits üblicherweise von einem Steuergerät abhängig von Betriebskennwerten des Fahrzeugs angesteuert (bei geöffneten Türen; abhängig vom Zündsignal; evtl. gedimmt ...). Diesem vorhandenen Steuergerät kann auch ein Signal über die aktive Diebstahlwarnanlage zugeleitet werden, und die Signalisierung dieses Zustandes kann dann ebenfalls von diesem Steuergerät gesteuert werden. Somit ist der Aufwand zur Realisierung der Erfindung denkbar gering, und die aufgabengemäß gewünschten Effekte sind erreichbar.

## Patentansprüche

1. Kraftfahrzeug mit einer Diebstahlwarnanlage und mit einem im Fahrzeuginnenraum angeordneten optischen Signalmittel zur Anzeige des Betriebszustandes der Diebstahlwarnanlage, das bei aktivierter Diebstahlwarnanlage aussetzend mit elektrischer Spannung beaufschlagt wird, **dadurch gekennzeichnet, dass** als optisches Signalmittel zumindest eine an sich bereits im Fahrzeuginnenraum vorhandene Innenraumleuchte verwendet wird.

2. Kraftfahrzeug mit einer Diebstahlwarnanlage nach Anspruch 1, **dadurch gekennzeichnet, dass** es sich bei der Innenraumleuchte um eine Ambient-Leuchte mit Leuchtdioden (LED) als Leuchtmittel handelt.

3. Kraftfahrzeug mit einer Diebstahlwarnanlage nach Anspruch 1 oder 2, **dadurch gekennzeichnet, dass** die Innenraumleuchte zur Innenraumbeleuchtung mit einer höheren Lichtintensität leuchtet als zur ruhestromoptimierten Signalisierung einer aktiven Diebstahlwarnanlage.

4. Kraftfahrzeug mit einer Diebstahlwarnanlage nach Anspruch 3, **dadurch gekennzeichnet, dass** die Lichtintensität der Innenraumleuchte durch Steuerung der Höhe der elektrischen Spannung, durch Pulsweitenmodulation oder durch selektive Ansteuerung mehrerer zur Innenraumleuchte gehörender Leuchtmittel erfolgt.

## Claims

1. Motor vehicle with a theft warning system and with an optical signal means arranged in the vehicle interior for indicating the operating state of the theft warning system, which signals means is subjected to a voltage intermittently when the theft warning system is activated, **characterised in that** at least one interior lamp which is actually already present in the vehicle interior is used as the optical signal means.

2. Motor vehicle with a theft warning system according to claim 1, **characterised in that** the interior lamp is an ambient lamp with light-emitting diodes (LEDs) as the lighting means.

3. Motor vehicle with a theft warning system according to claim 1 or 2, **characterised in that** the interior lamp illuminates with a higher light intensity for interior lighting than for signalling an active theft warning system with optimised static current.

4. Motor vehicle with a theft warning system according to claim 3, **characterised in that** the light intensity of the interior lamp is effected by control of the amount of the voltage, by pulse width modulation or by selective control of several lighting means belonging to the interior lamp.

## Revendications

1. Véhicule à moteur avec un dispositif d'alarme antivol et avec un moyen de signalisation optique agencé dans l'habitacle du véhicule pour indiquer l'état de fonctionnement du dispositif d'alarme antivol, lequel moyen est actionné périodiquement par une tension électrique lorsque le dispositif d'alarme antivol est actif, **caractérisé en ce qu'**au moins un plafonnier déjà existant en tant que tel dans l'habitacle du véhicule est utilisé comme moyen de signalisation optique.

2. Véhicule à moteur avec un dispositif d'alarme antivol selon la revendication 1, **caractérisé en ce que** le plafonnier est un éclairage ambiant avec des diodes électroluminescentes (DEL) comme moyen d'éclairage.

3. Véhicule à moteur avec un dispositif d'alarme antivol selon la revendication 1 ou 2, **caractérisé en ce que**, pour ce qui est de l'éclairage de l'habitacle, le plafonnier éclaire avec une intensité lumineuse plus élevée que pour la signalisation optimisée en courant de veille d'un dispositif d'alarme antivol actif.

4. Véhicule à moteur avec un dispositif d'alarme antivol selon la revendication 3, **caractérisé en ce que** l'intensité lumineuse du plafonnier résulte de la commande du niveau de la tension électrique, d'une modulation de largeur d'impulsion ou d'un contrôle sélectif de plusieurs moyens d'éclairage appartenant au plafonnier.
